# EUROPÄISCHE PATENTANMELDUNG

(11) **EP 3 486 825 A1**
(43) Veröffentlichungstag der Anmeldung: **22.05.2019**
(21) Anmeldenummer: 17201758.4
(22) Anmeldetag: 15.11.2017
(51) Int. Cl.: G06F 21/57, G05B 19/00, H04L 29/06, H04W 12/10

(54) **VERFAHREN UND VORRICHTUNG ZUM RECHNERGESTÜTZTEN BESTIMMEN EINES SCHWEREGRADS EINER FESTGESTELLTEN VERLETZUNG DER INTEGRITÄT**

(71) Anmelder: Siemens Aktiengesellschaft, 80333 München (DE)
(72) Erfinder: Belhachemi, Omar, 80639 München (DE); Falk, Rainer, 85586 Poing (DE); Feist, Christian Peter, 80689 München (DE); Fischer, Kai, 85598 Baldham (DE); Friedrich, Daniela, 81541 München (DE); Fries, Steffen, 85598 Baldham (DE); Heintel, Markus, 81377 München (DE)

(57) **Zusammenfassung**

Die vorliegende Erfindung betrifft ein Verfahren und eine Vorrichtung zum rechnergestützten Bestimmen eines Schweregrads einer festgestellten Verletzung der Integrität zumindest einer Komponente innerhalb eines verteilten System, insbesondere im Umfeld einer industriellen Fertigung und/oder Automatisierung, sowie ein zugehöriges Computerprogramm(produkt). Das Verfahren weist folgende Schritte auf:
- Festlegen einer Relevanz jeder solchen beteiligten Komponente abhängig von einer erfassten und/oder gespeicherten Konfiguration des Komponenten-Interaktionsprozesses, welche die Abfolge von Prozessschritten vorgibt,
- Ermitteln zumindest einer Auswirkung der festgestellten Verletzung der Integrität auf zumindest eine solche weitere Komponente basierend auf der festgelegten Relevanz,
- Zuordnen eines Schweregrades zu der festgestellten Verletzung der Integrität einer solchen Komponente auf Basis der ermittelten Auswirkung,
- Ausgeben einer den zugeordneten Schweregrad repräsentierenden Nachricht.

## Beschreibung

Die vorliegende Erfindung betrifft ein Verfahren und eine Vorrichtung zum rechnergestützten Bestimmen eines Schweregrads einer festgestellten Verletzung der Integrität zumindest einer Komponente innerhalb eines verteilten System, insbesondere im Umfeld einer industriellen Fertigung und/oder Automatisierung, sowie ein zugehöriges Computerprogramm(-produkt).

### Hintergrund der Erfindung

Die Integrität eines verteilten Systems, insbesondere einer technischen Anlage ist essenziell für die Produktivität und Güte der produzierten Güter sowie die Verfügbarkeit der Komponenten der kompletten Anlage. Unter Integrität ist hierbei zu verstehen, dass sich eine Anlage so verhält, wie sie geplant und konfiguriert wurde. Eine Verletzung der Integrität beispielsweise durch Manipulation eines Gerätes oder einer Menge von Geräten beeinträchtigt in der Regel die Eigenschaften eines Systems bzw. einer Anlage, wie zum Beispiel geringere Qualität der produzierten Güter, geringere Produktivität oder gar einen Ausfall eines Anlagenbereichs oder der gesamten Anlage.

Die frühzeitige Erkennung bzw. Feststellung und automatisierte Reaktion auf Integritätsverletzung von Geräten bzw. Komponenten, zum Beispiel durch nicht autorisierte Manipulationen, ist eine wichtige Anforderung. Diese Anforderung wird umso bedeutender, beispielsweise im Industrie 4.0 Umfeld, in denen Komponenten nicht mehr statisch verbaut und konfiguriert werden, sondern diese sich dynamisch an die geforderten Produktionsrahmenbedingungen anpassen können. Da den Komponenten einer Fertigung und oder Automatisierungsanlage unterschiedliche Funktionen zukommen, ist die Auswirkung einer Manipulation ebenfalls unterschiedlich zu ermitteln. Für eine zielgerichtete automatisierte Reaktion auf eine Manipulation ist eine vorgelagerte Ermittlung der Auswirkung sinnvoll. Nicht nur in Industrieanlagen, sondern auch im Umfeld des autonomen Fahrens, zum Beispiel durch Fahrzeuge oder Züge oder Roboter, ist eine solche Erkennung von Integritätsverletzung und eine angepasste automatische Reaktion darauf sinnvoll. Ein autonomes Fahren wird in der Regel in einem verteilten System organisiert, deren Komponenten ähnlich - wie oben bereits dargestellt - dynamisch entsprechend der gegebenen Rahmenbedingungen angepasst werden können.

Es sind unterschiedliche Ansätze möglich, Manipulationen oder Angriffe auf Geräte- oder Netzwerkebene in verteilten Systemen zu erkennen. Mögliche Beispiele auf Geräteebene sind z.B. Secure Boot, File System Integrity Protection, Access Control Mechanismen, Host Based Intrusion Detection Systeme. Mögliche Beispiele auf Netzwerkebene sind Security-Protokolle wie MACsec, IPsec, TLS oder Network Based Intrusion Detection Systeme bzw. Anomalieerkennungssysteme. Bei einem Auftreten von nicht autorisierten Operationen als Resultat einer Manipulation, kann das Ereignis durch den entsprechenden Mechanismus geloggt und als Basis für eine Analyse und Reaktion verwendet werden.

Es ist möglich, dass Geräte den Schweregrad erkannter Manipulationen vorab bewerten können, z.B. anhand der Information welcher Prozess oder welche Daten auf Geräteebene verändert wurden. Da die Geräte allerdings keinen Systemüberblick haben, können diese nicht bewerten, welche Auswirkung eine Integritätsverletzung im System zur Folge hat.

Aus DE 10 2016 21 98 48.3 ist bereits vorgeschlagen worden, die Integrität innerhalb eines Feldbus-Kommunikationsnetzwerkes zu überwachen. Hierbei erfolgt jedoch keine Ermittlung der Auswirkung einer Integritätsverletzung.

In der Industrie kann zur Bewertung des Schweregrades von möglichen oder tatsächlichen Sicherheitslücken in Computersystemen das sogenannte kommen vulnerable liegt die Common Vulnerability Scoring System (CVSS) verwendet werden. Im CVSS werden Sicherheitslücken nach verschiedenen Kriterien, sogenannten Metrik, bewertet und miteinander verglichen, sodass eine Prioritätenliste für Gegenmaßnahmen erstellt werden kann. Es ist selbst kein System zur Warnung vor Sicherheitslücken, sondern eher ein Standard, um verschiedene Beschreibung und Messsysteme miteinander kompatibel und allgemein verständlich zu machen. Diese Metrik bezieht sich jedoch nur auf die Art einer Security-Lücke an sich, nicht auf die Auswirkungen in einem System.

Es ist Aufgabe der Erfindung, eine verbesserte Bewertung bzw. Behandlung von erkannten Integritätsverletzungen bereitzustellen.

### Darstellung der Erfindung

Diese Aufgabe wird durch die unabhängigen Patentansprüche gelöst. Vorteilhafte Weiterbildungen sind Gegenstand der abhängigen Ansprüche.

Die Erfindung beansprucht ein Verfahren zum rechnergestützten Bestimmen eines Schweregrads einer festgestellten Verletzung der Integrität zumindest einer Komponente innerhalb eines verteilten Systems, welche an zumindest einem Komponenten-Interaktionsprozess, insbesondere einem Fertigungs- und/oder Automatisierungsprozess, beteiligt ist, aufweisend folgende Schritte:
- Festlegen einer Relevanz jeder solchen beteiligten Komponente abhängig von einer erfassten und/oder gespeicherten Konfiguration des Komponenten-Interaktionsprozesses, welche die Abfolge von Prozessschritten vorgibt,
- Ermitteln zumindest einer Auswirkung der festgestellten Verletzung der Integrität auf zumindest eine solche weitere Komponente basierend auf der festgelegten Relevanz,
- Zuordnen eines Schweregrades zu der festgestellten Verletzung der Integrität einer solchen Komponente auf Basis der ermittelten Auswirkung,
- Ausgeben einer den zugeordneten Schweregrad repräsentierenden Nachricht.

Eine Weiterbildung der Erfindung sieht vor, dass des weiteren Folgemaßnahmen auf Basis des zugordneten Schweregrades eingeleitet und/oder durchgeführt werden.

Eine Weiterbildung der Erfindung sieht vor, dass die Folgemaßnahmen zu Isolierung von Komponenten, Anhalten von Prozessschritten, Einschränkung der Funktionalität einer Komponente, Einbringen einer redundanten Ersatzkomponente in den Komponenten-Interaktionsprozess und Einführen von Nachbearbeitung Prozessschritten, um die oben genannten Auswirkungen zu korrigieren.

Die Erfindung erlaubt es, die Wichtigkeit/Relevanz von Geräten, Komponenten, Daten oder Kommunikationsverbindungen in einem Komponenten-Interaktionsprozess bzw. einem damit verbundenen Netzwerk automatisiert zu bewerten. Auf Basis dieser Bewertung kann automatisiert der Schweregrad einer erkannten bzw. festgestellten Integritätsverletzung analysiert werden, um darauf hin automatisiert Folgemaßnahmen einzuleiten zu können. Die Erfindung kann in einem System verwendet werden. Es ist möglich, gewisse Sicherheits-Vorfälle zu simulieren. Dies kann dazu dienen, besonders sensible Geräte/Komponenten/Daten/Kommunikationsverbindungen automatisiert zu identifizieren. Es kann somit eine rechnergestützte Bedrohungs- und Risikoanalyse erfolgen, bei der die konkreten Auswirkungen von bestimmten Angriffsszenarien bewertet werden. Die Relevanz kann anhand einer durch Simulation der Abfolge der Prozessschritte durchführbaren Risikoanalyse festgelegt werden. Zudem können die Ergebnisse aus einer theoretischen Bedrohungs- und Risikoanalyse genutzt werden, die Bestimmung der Relevanz von Komponenten zu unterstützen.

Eine Weiterbildung der Erfindung sieht vor, dass die Relevanz zudem abhängig von der Funktionalität und/oder von der Softwareversion und/oder den Daten und/oder von einer Ausfallsicherheit und/oder von der physikalischen Exponiertheit und/oder vom Sicherheitsstatus einer solchen beteiligten Komponente festgelegt wird.

Eine Weiterbildung der Erfindung sieht vor, dass die Auswirkung zudem abhängig von der Anzahl voneinander abhängiger Komponenten und/oder der Anzahl von identischen oder gleichartigen Komponententypen und/oder von der Abhängigkeit der Abfolge der Prozessschritte ermittelt wird.

Eine Weiterbildung der Erfindung sieht vor, dass die Auswirkung zudem abhängig von einem vorgebbaren und/oder vorgegebenen Fehlermodell von einzelnen Komponenten und/oder deren Zusammenwirken ermittelt wird.

Eine Weiterbildung der Erfindung sieht vor, dass abhängig von einer vorgebbaren Kategorie der ermittelten Auswirkung der Schweregrad zugeordnet wird.

Eine Weiterbildung der Erfindung sieht vor, dass die Konfiguration Projektierungsdaten der Komponenten umfasst, die deren Relevanz innerhalb des Komponenten-Interaktionsprozesses enthalten oder davon abgeleitet werden können.

Eine Weiterbildung der Erfindung sieht vor, dass die Konfiguration zudem Log-Protokolldaten umfasst, die die Relevanz von protokollierten Ereignissen innerhalb des Komponenten-Interaktionsprozesses enthalten.

Ein weiterer Aspekt der Erfindung sieht ein System bzw. eine Vorrichtung bzw. Anordnung zum rechnergestützten Bestimmen eines Schweregrads einer festgestellten Verletzung der Integrität zumindest einer Komponente innerhalb eines verteilten Systems vor, welche an zumindest einem Komponenten-Interaktionsprozess, insbesondere einem Fertigungs- und/oder Automatisierungsprozess, beteiligt ist, aufweisend:
- Mittel zum Festlegen einer Relevanz jeder solchen beteiligten Komponente abhängig von einer erfassten und/oder gespeicherten Konfiguration des Komponenten-Interaktionsprozesses, welche die Abfolge von Prozessschritten vorgeben kann,
- Mittel zum Ermitteln zumindest einer Auswirkung der festgestellten Verletzung der Integrität auf zumindest eine solche weitere Komponente basierend auf der festgelegten Relevanz,
- Mittel zum Zuordnen eines Schweregrades zu der festgestellten Verletzung der Integrität einer solchen Komponente auf Basis der ermittelten Auswirkung,
- Mittel zum Ausgeben einer den zugeordneten Schweregrad repräsentierenden Nachricht.

Eine Weiterbildung der Erfindung sieht Mittel zum Einleiten und/oder Durchführen von Folgemaßnahmen auf Basis des zugordneten Schweregrades vor.

Die Vorrichtung kann entsprechend der Ausführungsformen/Weiterbildungen zum oben genannten Verfahren aus- bzw. weitergebildet sein.

Die vorstehend genannten Komponenten können in Software, Firmware und/oder Hardware implementiert sein. Die können als eine Art Funktionseinheiten verstanden werden, die auch in Ihrer Funktion in beliebiger Kombination ein eine einzige Einheit bzw. Komponente integriert sein können.

Ein weiterer Aspekt der Erfindung kann ein Computerprogrammprodukt mit mindestens einem Computerprogramm, das Mittel zur Durchführung des Verfahrens nach einer der vorstehend erwähnten Ausführungsformen aufweist, wenn das mindestens eine Computerprogramm auf der Vorrichtung nach einer der vorstehend erwähnten Ausführungsformen zur Ausführung gebracht wird.

Obige Vorrichtungen, Anordnungen bzw. Systeme und gegebenenfalls das Computerprogramm(-produkt) können im Wesentlichen analog wie das Verfahren und dessen Ausgestaltungen bzw. Weiterbildungen entsprechend aus- bzw. weitergebildet werden.

Ausführungsbeispiel(e) :
Weitere Vorteile, Einzelheiten und Weiterbildungen der Erfindung ergeben sich aus der nachfolgenden Beschreibung von Ausführungsbeispielen in Verbindung mit den Zeichnungen.

### Dabei zeigt

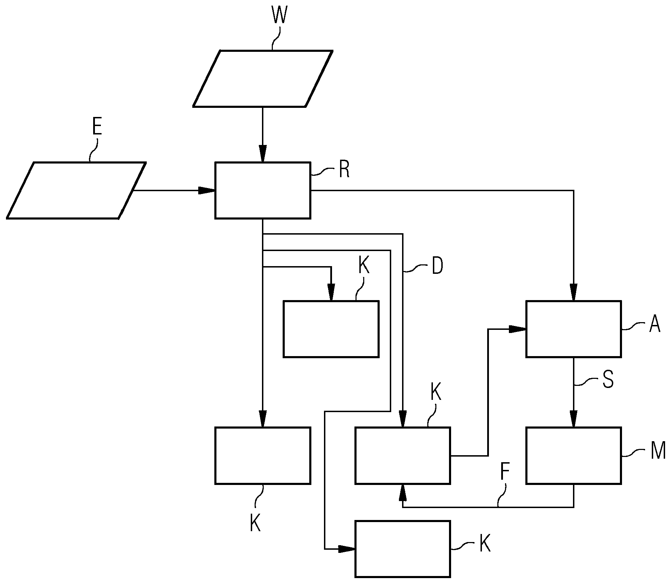

Die Figur das erfindungsgemäße System bzw. Vorgehen.

Im Folgenden wird beispielhaft ein verteiltes System gezeigt. Üblicherweise liegen Konfigurationsdaten einer Projektierung eines Fertigungs- bzw. Automatisierungssystems/-anlage vor, die bei der Projektierung bzw. beim Entwurf (Engineering) der Anlage bereits erfasst bzw. gespeichert wurden. Das Projekt kann mit zusätzlichen Informationen angereichert werden, die eine Ableitung der Wichtigkeit/Relevanz der einzelnen Komponenten K innerhalb der Anlage unterstützen.

In der Regel interagieren die Komponenten untereinander im Kommunikations-Interaktionsprozess. Eine Konfiguration gibt die Abfolge der Prozessschritte des Kommunikations-Interaktionsprozesses vor. Die Komponenten können als Industrial Control Systems (ICS), z.B. PLC (Steuerprozessoren) ausgebildet sein.

Ein Komponenten-Interaktionsprozess kann mittels einer Datenübertragung bzw. Kommunikation zwischen den genannten Komponenten unterstützt werden. Diese kann beispielsweise eine drahtgebundene oder drahtlose Schnittstelle (z.B. Mobilfunkschnittstelle (GSM, UMTS, LTE), eine WLAN-, eine Bluetooth-, ZigBee- (insbesondere eingesetzt in der Haustechnik) oder eine NFC-Schnittstelle (NFC: Near Field Communication)) sein. Die Kommunikation zwischen den Komponenten ist nicht auf eine Punkt-zu-Punkt(Peer)-Kommunikation limitiert. Es sind auch Gruppenkommunikation, Broadcast-Nachrichten oder Publish/Subscribe Kommunikationsmuster denkbar.

Es können Ergebnisse E einer theoretischen und/oder einer simulierten Bedrohungs- und Risikoanalyse in ein Engineering-System R importiert und die Kriterien für die Beurteilung der Wichtigkeit W festgelegt werden.

Die Wichtigkeit der im Projekt involvierten ICS-Komponenten, deren erfasste bzw. gespeicherte Konfiguration in Form von Daten und Kommunikationsverbindungen werden analysiert und bewertet und ggf. in Bewertungsdaten festgehalten.

Zusätzlich können Projektierungsdaten D in die ICS-Komponenten geladen werden. In einer Ausführungsform können die Bewertungsdaten Teil der Projektierungsdaten sein. Die Informationen zur Wichtigkeit/Relevanz werden einem Bewertungssystem A zur Verfügung gestellt. Wenn während des Betriebes z.B. Konfigurationsdaten einer ICS-Komponente unautorisiert verändert bzw. manipuliert werden, sendet die ICS-Komponente K ein Security-Event (Sicherheits-Ereignis) an das Bewertungssystem A. Das Bewertungssystem ermittelt anhand des Security-Events und der Relevanz dieser Komponente die Auswirkung dieser Integritätsverletzung, ordnet dieser Auswirkung einen Schweregrad zu, der beispielsweise in Kategorie B eingestuft wird, und gibt diese Information mittels einer Nachricht S an ein Reaktionssystem M weiter. Das Reaktionssystem M veranlasst u.a. auf Basis des Schweregrades und der betroffenen ICS-Komponente mittels Ausgabe einer den Schweregrad repräsentierenden Nachricht eine automatisierte Folgemaßnahme und lädt die authentischen Konfigurationsdaten wieder in das Gerät.

Im Folgenden wird auf die einzelnen Schritte näher erläutert:
Automatisierte Ableitung der Wichtigkeit W/Relevanz:
   Für ein Fertigungs- und Automatisierungssystem wird anhand von verschiedenen Kriterien die Wichtigkeit/Relevanz von Geräten, Komponenten K, Daten und Kommunikationsverbindungen des verteilten(Teil-)Systems ermittelt. Dies kann z.B. auf Basis von qualitativen Stufen bzw. Kategorien (A, B, C, ...) oder auf Basis einer Kennzahl erfolgen.

Die Ergebnisse E einer Bedrohungs- und Risikoanalyse, die die Bedrohungen und Risiken des verteilten Systems beschreiben liegen in einem definierten Format (z.B. XML, JSON) vor bzw. werden in dieser Format übertragen. Die Daten werden in ein Engineering-System R importiert und mit der Projektierung und der aktuellen Konfiguration der Anlage abgeglichen. Hierbei werden die identifizierten Risiken auf die Wichtigkeit/Relevanz von Geräten, Komponenten, Daten oder Kommunikationsverbindungen abgebildet, d.h. mit ansteigendem Risiko steigt auch die Wichtigkeit/Relevanz. Weiterhin kann neben der aktuellen Konfiguration auch die Auswirkung auf geplante Konfigurationen, die für eine flexible Fertigung im Rahmen von Industrie 4.0 zur Bearbeitung von weiteren Fertigungsaufträgen erfolgen sollen, ermittelt werden. Dadurch wird nicht nur die Auswirkung bezüglich der aktuellen Konfiguration ermittelt, sondern auch die Auswirkung der Integritätsverletzung auf weitere Konfigurationen von geplanten Fertigungsaufträgen.

In einer Ausführungsform können die Angaben zur Wichtigkeit oder Relevanz auch Teil der Projektierungsdaten einer ICS-Komponente K bzw. einer Anlage sein, die bei einem Securityvent mitgemeldet werden können. In einer weiteren Ausführungsform, unter Nutzung von Logging-Protokollen wie z.B. syslog, kann die Wichtigkeit in einen Schwerwiegenheitswert der Events mit eingerechnet werden. Ein Security Event von einem Gerät höherer Wichtigkeit hat damit einen höheren Schwerwiegenheitswert bzw. Schweregrad als ein anderes Gerät (unter Umständen gleicher Bauart), das für das Gesamtsystem weniger wichtig ist.

Die Relevanz kann auf Basis der erwarteten Funktionalität eines Gerätes und dessen Relevanz im Gesamtsystem beurteilt werden. Geräte, die eine essentielle Funktion ausüben und die bei einer Beeinträchtigung zu einem Ausfall der Produktion oder einer Verschlechterung der Güte führen würden, haben einen hohen Einfluss auf die Systemintegrität. Ebenfalls sind Geräte, die einen Einfluss auf sicherheitskritische Funktion haben, haben sehr weitreichende Auswirkungen. Weiterhin kann die Bedeutung eines Fertigungsauftrags bewertet werden (z.B. ob dies ein Testlauf oder Prototyp ist oder eine reguläre Fertigung, evtl. Strafzahlungen bei Lieferverzug des betroffenen Fertigungsauftrags).

Die Funktionalität eines Gerätes hängt im Wesentlichen von der Software bzw. den gegebenenfalls historischen Daten eines Gerätes ab, wenn keine Veränderungen an der physikalischen Hardware angenommen werden. Daten sind z.B. die Firmware/Software eines Gerätes, Programmierfiles für programmierbare Hardware- Komponenten wie FPGAs, Skripte oder auch statische bzw. konfigurierbare Parameter, die zur Ausführung der Software verwendet werden. Die Auswirkungen einer Manipulation von diesen Daten hängen davon ab, welchen Einfluss die Daten auf die Funktion des Systems haben. Um die Auswirkungen auf die Systemintegrität feingranularer bestimmen zu können, können Daten zusätzlich nach einem kritischen Maß für ein Gerät klassifiziert und ausgewertet werden.

Aus Daten der Vergangenheit lässt sich die Wichtigkeit/Relevanz von Geräten, Komponenten, Daten und Kommunikationsverbindungen ableiten, in dem z.B. Auswirkungen durch mögliche Veränderungen in der Vergangenheit mit einbezogen werden. Die automatisierte Ableitung der Wichtigkeit/Relevanz von Geräten, Komponenten, Daten oder Kommunikationsverbindungen kann bei Bedarf noch manuell angepasst und in einem definierten Format exportiert werden.

Komponenten, die eine wesentliche Funktion in der industriellen Fertigung wahrnehmen, werden redundant ausgelegt, um im Fehlerfall (nahezu) unterbrechungsfrei produzieren zu können.

Hierbei steht die Betrachtung aus Sicht der Ausfallwahrscheinlichkeit von Geräten auf Grund von Hardware-Defekten im Vordergrund. Aus dem Blickwinkel der Integritätsüberwachung kann die redundante Auslegung von Geräten die Auswirkungen von Manipulationen verringern. Auch kann bewertet werden, ob in der Fertigung weitere Geräte als Ersatz verfügbar sind (z.B. weitere Produktionsmaschinen).

Die Auswirkungen der Integritätverletzung innerhalb eines verteilten Systems hängen auch davon ab, inwieweit eine betroffene Komponente exponiert, d.h. für andere Teilnehmer erreichbar ist bzw. erreichbar sein muss. Einerseits kann eine exponierte Komponente leichter angegriffen werden, dies spielt für die Betrachtung der Auswirkung aber keine Rolle. Zum anderen kann über eine exponierte Komponente möglicher Schadkode breiter verteilt werden bzw. können Geräte in anderen Teil-Systemen angegriffen werden. Es wird also bewertet, ob eine betroffene Komponente als Einfallstor für weitergehende Angriffe von einem Angreifer verwendet werden kann. Insbesondere kann unter Umständen bewertet werden, wie wahrscheinlich eine Kompromittierung im Vergleich zu weniger oder höher exponierten Geräten in dem Automatisierungssystem ist.

Unter dem Begriff Sicherheitsstatus ist in diesem Kontext zu verstehen, inwieweit ein Gerät aus Sicherheitssicht auf dem aktuellen Stand ist. Anhaltspunkte hierfür sind z.B. die Aktualität der Firmware-Version, der Security-Patch Stand oder die Nutzung von zusätzlichen Sicherheits-Diensten wie Virenscanner oder Software White-Listing. Ein weiterer Anhaltspunkt ist die Stärke der Konfiguration von SicherheitsMaßnahmen oder -Protokollen, die nicht durch die Firmware fest vorgegeben sind. Wird z.B. TLS als Grundlage für eine sichere Kommunikation eingesetzt, beeinflusst die Konfiguration dieses Protokolls die Stärke der Security-Maßnahme. Ähnlich spielen auch die statisch konfigurierten Sicherheits-Mechanismen eine Rolle, wie beispielsweise Zugriffskontrollsysteme. Hierbei könnten z.B. unterstützende Werkzeuge zur Bewertung der Konfiguration (z.B. der Zugriffskontroll-Policy) herangezogen werden.

Die parallele Nutzung von identischen bzw. gleichartigen Gerätetypen kann auch ein Nachteil für das Gesamtsystem darstellen. Wird ein Gerät auf Grund einer bekannten Schwachstelle angegriffen und verändert, sind Geräte bzw. Komponenten des gleichen Typs mit demselben SW-Stand generell ebenfalls gefährdet, ein Ziel dieses Angriffes zu sein. Handelt es sich also nicht um einen gezielten Angriff einer bestimmten, einzelnen Komponente, z.B. auf Grund ihrer exponierten Funktionalität, hat die Anzahl der potentiell gefährdeten Komponenten einen Einfluss auf die Auswirkung der Systemintegrität.

Ein weiterer Faktor, der zur Ermittlung der Auswirkung herangezogen werden kann, ist die Anzahl der Geräte, die von einem manipulierten Gerät abhängen. Dies kann auch
durch die Anzahl bestehender Kommunikationsverbindungen abstrahiert werden. Eine Steuerung, die mit mehreren Sensoren und Aktoren interagiert, hat möglicherweise einen größeren Einfluss auf das System als ein Gerät, das nur mit einer bestimmten Steuerung kommuniziert. Implizit ist dies bereits durch die Wichtigkeit der Funktionalität eines Gerätes wiedergespiegelt.

Die Auswirkung einer Integritätsverletzung kann abhängig von einem vorgebbaren und/oder vorgegebenen Fehlermodell von einzelnen Komponenten und/oder deren Zusammenwirken ermittelt wird. Die Auswirkung einer Manipulation der Systemintegrität kann dahingehend ermittelt werden, ob diese Veränderungen Auswirkungen auf Folgeprozesse bzw. -prozessschritte hat. Dies kann auch mittels einer Simulation der Abfolge der Prozessschritte ermittelt werden.

Beeinträchtigt die Manipulation eines vorgelagerten Fertigungsschrittes die nachgelagerten Prozessschritte (z.B. Ausfall einer kompletten Produktionslinie), ist die Auswirkung höher zu bewerten als für den Fall, dass eine Manipulation auf ein Teil-System beschränkt bleibt. Die Abhängigkeit/Auswirkung auf Folgeprozesse kann durch nachgelagerte Qualitätssicherungsmaßnahmen reduziert werden. Kann die Fehlerfreiheit des produzierten Werkstücks überprüft werden, oder kann ein Produktionsfehler ggf. mit überschaubarem Aufwand durch eine Nachbearbeitung korrigiert werden, ist die Auswirkung ggf. niedriger zu bewerten.

Ein Gut mit reduzierter Qualität kann ggf. als "B-Ware" vermarktet werden. Daher kann ein betroffenes
Gut ggf. noch eingeschränkt verwendet werden. Ein jedoch nicht als fehlerhaft erkanntes, ausgeliefertes Werkstück kann sich auf die Sicherheit oder Produktlebenszeit auswirken.

Die im vorangehenden Schritt festgelegte Wichtigkeit/Relevanz wird in einem Bewertungssystem A (z.B. Sicherheitsleitstand für Automatisierungsnetze) importiert. Bei einer Integritätsverletzung wird dem Bewertungssystem mitgeteilt, welche Geräte/Komponenten betroffen sind und welche Daten manipuliert wurden. Dies kann z.B. durch die Übertragung von Security-Events erfolgen. Dadurch kann das Bewertungssystem anhand der Wichtigkeit/Relevanz auf die Auswirkung der Integritätsverletzung schließen und eine Zuordnung zum Schweregrad bestimmen. Die automatisierte Bewertung kann noch mit Kontextinformationen (z.B. Temperatur der Komponente, verwendeter Regelalgorithmus, bearbeitetes Werkstück, etc.) angereichert werden, die erst zur Laufzeit zur Verfügung stehen.

Die Bewertung kann z.B. auf Basis von qualitativen Kategorien (A, B, C, ...) oder auf Basis einer Kennzahl erfolgen. Die abschließende Bewertung wird einem Reaktionssystem übergeben, das Bestandteil des Bewertungssystems oder ein separates System sein kann.

Abhängig vom zugeordneten Schweregrad und der betroffenen Geräte, Komponenten, Daten oder Kommunikationsverbindungen wird nun automatisiert eine Folgemaßnahme mittels Ausgabe einer den Schweregrad repräsentierenden Nachricht eingeleitet. Hierzu können dem Reaktionssystem z.B. Regeln oder Maßnahmen hinterlegt werden, die auszuführen sind. Es können die Regeln auch noch mit Kontextinformationen angereichert werden, die erst zur Laufzeit bekannt sind. Die Maßnahmen können auch durch ein dynamisches selbstlernendes System ergänzt bzw. identifiziert werden. Hierzu können Folgemaßnahmen auch in der Simulation überprüft werden, bevor diese in der realen Anlage angewendet werden.

Mögliche Folgemaßnahmen können z.B. sein:
- Isolierung eines Gerätes auf Netzwerkebene (z.B. in ein Remediation Netzwerk (VLAN)), um einen definierten Zustand des Gerätes wieder herstellen zu können.
- Isolierung eines Gerätes durch kryptographische Maßnahmen (z.B. Schlüsselupdate)
- Umschaltung auf ein redundantes (Ersatz-)Gerät
- Nur eingeschränkte Funktionen sind erlaubt, z.B. ein Roboter bewegt sich mit reduzierter Geschwindigkeit.
- Teilweiser Stopp der Produktion
- Wiedereinspielen einer authentischen Software/Firmware
- Wiedereinspielen authentischer Konfigurationsdaten
- Information der in einem System beteiligten Geräte
- Hilfe von fachkundigem Personal einholen
- Zusätzliche Qualitätsmanagement-Maßnahmen für das produzierte Gut (z.B. ist ggf. eine Prüfung jedes Werkstücks günstiger als ein Produktionsausfall)
- Zusätzliche Nachbearbeitungsschritte, um fehlerhaft produzierte Güter in einen ordnungsgemäßen Zustand zu versetzen.
- Sichere Aktualisierung der Integritätsmaßnahmen, die für Software und Firmware bei einem Secure-Boot-Prozess benötigt werden.

Der Begriff "Prozessor", "zentrale Signalverarbeitung", "Steuereinheit" oder "Datenauswertemittel", wie hier verwendet, umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequentiellen Verarbeitung bzw. Ausführung von Instruktionen ausgelegt bzw. konfiguriert sein.

Obwohl die Erfindung im Detail durch die Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum rechnergestützten Bestimmen eines Schweregrads einer festgestellten Verletzung der Integrität zumindest einer Komponente (K) innerhalb eines verteilten Systems, welche an zumindest einem Komponenten-Interaktionsprozess, insbesondere einem Fertigungs- und/oder Automatisierungsprozess, beteiligt ist, aufweisend folgende Schritte:
- Festlegen einer Relevanz jeder solchen beteiligten Komponente abhängig von einer erfassten und/oder gespeicherten Konfiguration des Komponenten-Interaktionsprozesses, welche die Abfolge von Prozessschritten vorgibt,
- Ermitteln zumindest einer Auswirkung der festgestellten Verletzung der Integrität auf zumindest eine solche weitere Komponente basierend auf der festgelegten Relevanz,
- Zuordnen eines Schweregrades zu der festgestellten Verletzung der Integrität einer solchen Komponente auf Basis der ermittelten Auswirkung,
- Ausgeben einer den zugeordneten Schweregrad repräsentierenden Nachricht.

2. Verfahren nach dem vorhergehenden Anspruch, **dadurch gekennzeichnet, dass** des weiteren Folgemaßnahmen auf Basis des zugordneten Schweregrades eingeleitet und/oder durchgeführt werden.

3. Verfahren nach dem vorhergehenden Anspruch, **dadurch gekennzeichnet, dass** die Folgemaßnahmen zu Isolierung von Komponenten, Anhalten von Prozessschritten, Einschränkung der Funktionalität einer Komponente, Einbringen einer redundanten Ersatzkomponente in den Komponenten-Interaktionsprozess und Einführen von Nachbearbeitung Prozessschritten, um die oben genannten Auswirkungen zu korrigieren.

4. Verfahren nach einem der vorhergehenden Ansprüche, **dadurch gekennzeichnet, dass** die Relevanz zudem abhängig von der Funktionalität und/oder von der Softwareversion und/oder den Daten und/oder von einer Ausfallsicherheit und/oder von der physikalischen Exponiertheit und/oder vom Sicherheitsstatus einer solchen beteiligten Komponente festgelegt wird.

5. Verfahren nach einem der vorhergehenden Ansprüche, **dadurch gekennzeichnet, dass** die Relevanz anhand einer theoretischen und/oder durch Simulation der Abfolge der Prozessschritte durchführbaren Risikoanalyse (E) festgelegt wird.

6. Verfahren nach einem der vorhergehenden Ansprüche, **dadurch gekennzeichnet, dass** die Auswirkung zudem abhängig von der Anzahl voneinander abhängiger Komponenten und/oder der Anzahl von identischen oder gleichartigen Komponententypen und/oder von der Abhängigkeit der Abfolge der Prozessschritte ermittelt wird.

7. Verfahren nach einem der vorhergehenden Ansprüche, **dadurch gekennzeichnet, dass** die Auswirkung zudem abhängig von einem vorgebbaren und/oder vorgegebenen Fehlermodell von einzelnen Komponenten und/oder deren Zusammenwirken ermittelt wird.

8. Verfahren nach einem der vorhergehenden Ansprüche, **dadurch gekennzeichnet, dass** abhängig von einer vorgebbaren Kategorie der ermittelten Auswirkung der Schweregrad zugeordnet wird.

9. Verfahren nach einem der vorhergehenden Ansprüche, **dadurch gekennzeichnet, dass** die Konfiguration Projektierungsdaten (D) der Komponenten (K) umfasst, die deren Relevanz innerhalb des Komponenten-Interaktionsprozesses enthalten oder davon abgeleitet werden können.

10. Verfahren nach einem der vorhergehenden Ansprüche, **dadurch gekennzeichnet, dass** die Konfiguration zudem Log-Protokolldaten umfasst, die die Relevanz von protokollierten Ereignissen innerhalb des Komponenten-Interaktionsprozesses enthalten.

11. Vorrichtung zum rechnergestützten Bestimmen eines Schweregrads einer festgestellten Verletzung der Integrität zumindest einer Komponente (K) innerhalb eines verteilten Systems, welche an zumindest einem Komponenten-Interaktionsprozess, insbesondere einem Fertigungs- und/oder Automatisierungsprozess, beteiligt ist, aufweisend:
- Mittel (R) zum Festlegen einer Relevanz jeder solchen beteiligten Komponente abhängig von einer erfassten und/oder gespeicherten Konfiguration (W) des Komponenten-Interaktionsprozesses, welche die Abfolge von Prozessschritten vorgeben kann,
- Mittel (A) zum Ermitteln zumindest einer Auswirkung der festgestellten Verletzung der Integrität auf zumindest eine solche weitere Komponente basierend auf der festgelegten Relevanz,
- Mittel zum Zuordnen eines Schweregrades (S) zu der festgestellten Verletzung der Integrität einer solchen Komponente auf Basis der ermittelten Auswirkung,
- Mittel zum Ausgeben einer den zugeordneten Schweregrad repräsentierenden Nachricht.

12. Vorrichtung nach dem vorhergehenden Anspruch, **gekennzeichnet durch** Mittel (M) zum Einleiten und/oder Durchführen von Folgemaßnahmen auf Basis des zugordneten Schweregrades.

13. Vorrichtung nach einem der vorhergehenden Vorrichtungsansprüche, **dadurch gekennzeichnet, dass** die Konfiguration Projektierungsdaten (D) der Komponenten (K) umfasst, die deren Relevanz innerhalb des Komponenten-Interaktionsprozesses enthalten oder davon abgeleitet werden können.

14. Vorrichtung nach einem der vorhergehenden Vorrichtungsansprüche, **dadurch gekennzeichnet, dass** die Konfiguration zudem Log-Protokolldaten umfasst, die die Relevanz von protokollierten Ereignissen innerhalb des Komponenten-Interaktionsprozesses enthalten.

15. Computerprogrammprodukt mit mindestens einem Computerprogramm, das Mittel zur Durchführung des Verfahrens nach einem der vorstehenden Verfahrensansprüche aufweist, wenn das mindestens eine Computerprogramm auf der Vorrichtung nach einem der vorstehenden Vorrichtungsansprüche zur Ausführung gebracht wird.
